# EUROPEAN PATENT APPLICATION

(11) **EP 3 511 873 A1**
(43) Date of publication of application: **17.07.2019**
(21) Application number: 18151656.8
(22) Date of filing: 15.01.2018
(51) Int. Cl.: G06Q 10/00, G06Q 10/06

(54) **TIMEKEEPING METHOD AND SYSTEM**

(71) Applicant: Unique IQ Limited, Sambourne Redditch B96 3EW (GB)
(72) Inventor: Lynes, David, Redditch, B96 6HT (GB)
(74) Representative: Noble, Frederick

(57) **Abstract**

A method and system is disclosed which makes use of a mobile device, for example a mobile smartphone, carried by a worker, to automatically clock-on and clock-off planned shifts. The method and system is particularly suitable for use for example in the home care sector, and allows attendance at client sites to be recorded accurately and automatically, without any user intervention being required by the worker during his shift.

## Description

The present invention relates to a timekeeping system, in particular to a system which records a worker's presence for a planned shift automatically using a mobile device carried by the worker.

### BACKGROUND TO THE INVENTION

Various types of service businesses have a number of mobile workers who travel between client sites to provide services to clients. For example, in the home care sector workers will have shifts of varying durations at different clients' homes, and need to travel between clients and evidence their arrival and departure times at each location. There are various known ways of doing this. For example, some systems involve the worker calling a number from a fixed-line telephone at the client address. Other systems may make use of a mobile device having a GPS receiver and a user interface allowing the user to "clock-on" and "clock-off". Some existing systems require physical hardware to be installed at the client site to evidence attendance.

However, all known systems require some form of manual intervention by the worker involved. This is problematic because the clocking-on process is often carried out some time after the actual arrival time, or even forgotten altogether. Particularly in the home care sector, a care worker arriving at a client's home may find their client injured, fallen, or with some other urgent need. As a matter of good service the care worker does not prioritise the clocking-on process over the client's immediate needs. For systems based on fixed-line telephones, the care worker may arrive to find their client engaged on a telephone call. For various reasons therefore attendance records collected by known systems are often fragmentary, require time-consuming manual adjustment, and do not always provide categorical evidence in case of a dispute.

Even when known systems work correctly, they require a worker on-site to carry out an operation which inevitably takes some time. With some care workers having in any case very short shifts with particular clients, even a couple of minutes taken to properly operate the attendance tracking system can take valuable time from the worker's primary responsibilities.

It is an object of the invention to provide a fully-automatic timekeeping system allowing for accurate attendance tracking without requiring any input from the worker during their shift.

### SUMMARY OF THE INVENTION

According to the present invention, there is provided a method of automatically recording attendance by a worker at work sites, the method comprising the steps of:
providing a schedule of planned work, the schedule including a plurality of planned shifts and each shift including a time window and a location;
providing the worker with a mobile device, the mobile device including a positioning module for determining the current location of the device, and a processor;
maintaining on the mobile device a list of active geofences, each geofence being a perimeter around the location of a shift, wherein the current time is within the time window of the shift;
monitoring the position of the mobile device in relation to the list of active geofences, the monitoring step including repeatedly reading the current position of the mobile device from the positioning module and determining whether the position is inside any active geofence, the read-and-check process being repeated at a first sampling interval;
when the mobile device enters an active geofence, carrying out the steps of:
   repeatedly reading the current position of the mobile device from the positioning module and storing the position, the read-and-store step being repeated at a second sampling interval for a first predetermined time period after entering the geofence; and
   if the mobile device remains in the geofence for the entirety of the first predetermined time period, recording the time of entry to the geofence as a 'clock-on' time, otherwise, if the mobile device leaves the geofence during the first pre-determined time period, returning to the monitoring step;
when the mobile device exits a geofence after the first predetermined time period has elapsed and a 'clock-on' time has been recorded, carrying out the steps of:
   repeatedly reading the current position of the mobile device from the positioning module and storing the position, the read-and-store step being repeated at a third sampling interval for a second predetermined time period after exiting the geofence; and
   if the mobile device remains outside the geofence for the entirety of the second predetermined time period, recording the time of exiting the geofence as a 'clock-off' time, otherwise, if the mobile device re-enters the geofence during the second predetermined time period, returning to the monitoring step,
in which the second sampling interval and the third sampling interval are shorter intervals than the first sampling interval.

The method of the invention allows for mobile workers to record attendance at shifts completely automatically, without any intervention by the worker during the shift being required. The worker has a particular planned schedule, which in most cases will have some flexibility. This can be reflected in the time window of each shift. For example, the planned time of a particular one hour shift may be from 10am to 11am, but may have a two hour flexibility, so the worker is expected to attend for one continuous hour at some point between 8am and 1pm. In this case, the time window of the shift would be 8am to 1pm. During that time window, and only during that time window, a geofence is active on the mobile device around the site of that planned shift. Because of the flexibility in the schedule, multiple geofences may be active on the device at any one time, i.e. it may be possible for the worker to clock-on to either one of two or more different planned shifts in different locations at a particular time.

In "monitoring" mode, the sampling rate is relatively slow, i.e. the first sampling interval is a relatively long period of time. This preserves the battery of the mobile device, and also minimises use of mobile data in devices which use a mobile data connection to support accurate position determination. Many mobile smartphones provide geofencing capability as an operating system feature, and the operating system may automatically vary the first sampling interval depending on how close a device appears to be to a geofence boundary. For example, if the device is miles from the boundary of any active geofence then the sampling interval may be as long as several minutes. On the other hand if the device is very close to the boundary of an active geofence then the sampling interval may be automatically decreased to a few seconds. The average sampling interval in monitoring mode though is much longer than the second and third sampling intervals.

Once the mobile device crosses into an active geofence, a period of high-intensity tracking begins. The second sampling rate is much faster, for example in some embodiments the second sampling interval may be one second. As an example, the first predetermined time period may be five minutes or about five minutes. The purpose of this period of aggressive tracking is two-fold. Firstly, it eliminates false triggers where a worker has travelled near to an active geofence but has not started work there. In some scenarios it is quite likely that a worker would temporarily enter an active geofence incidentally, for example where the worker has to visit two clients on the same road, and drives past one client on the way to another. If the geofence boundary were crossed on a 'drive past' then the period of high resolution tracking would begin, but quickly the worker would leave the geofence and the device would return to low-resolution monitoring mode without clocking-on to the work site.

The second purpose of the high resolution tracking is to provide precise position information for a period just after the clock-on time. This information may be invaluable for resolving a dispute over whether the worker has or has not turned up for his or her shift. Because a large number of samples are taken, a very precise position can be calculated even if the precision of each reading from the location module is low. For example, the GPS module on a typical smartphone, depending on factors such as the number of 'visible' satellites and whether a data network is available, may provide a precision of anywhere between around 5m and around 50m. Even a moderate precision of say 20m may not on its own prove that the worker actually entered the client's home, as opposed to say waiting outside in the car. However, by combining multiple readings taken with a very short sampling interval, precise enough position information may be derived.

In one embodiment, the sample closest to the central point of the position of the planned shift may be recorded. It may be that the other samples can be deleted at the end of the time period, retaining only the closest sample.

After the first predetermined time period, assuming it is determined that the worker has not left the geofence, the worker will be automatically 'clocked-on' to a shift.

The same process of a period of aggressive high-resolution tracking takes place when the worker leaves the geofence after the start of the shift. This ensures that a 'clock-off is only recorded once the worker has definitely been outside the geofence for more than the second predetermined time period, preventing an unintentional clock-off being caused by, for example, a single inaccurate position reading from GPS. Once the worker has been outside the geofence for the second predetermined time period, a 'clock-off' is recorded at the time when the mobile device first exited the geofence at the start of the predetermined time period.

In many embodiments, the second sampling interval is the same or about the same as the third sampling interval, and the first predetermined time period is about the same as the second predetermined time period.

It is envisaged that in most practical embodiments, the mobile device will be a modern mobile smartphone, having a processor, data storage, a position module and a user interface at a minimum. The mobile device is also likely to be equipped with access to a data network, for example via WiFi or mobile cellular data or preferably both.

Preferably the software running on the mobile smartphone which causes the mobile smartphone to operate according to the invention runs in background mode, without the user having to 'open' the application for the automatic tracking to take place.

It is envisaged that in embodiments a server device may be provided which can communicate with multiple mobile devices carried by different workers. The server device may provide schedules of planned work to the mobile devices, and the mobile devices preferably transmit at least clock-on and clock-off times for each shift back to the server. The mobile devices may also transmit some or all of the location readings from the periods of high-resolution tracking back to the server device. For example in some embodiments only the closest position sample to the central point of the work site is sent for each shift.

The server device in turn may integrate with various other systems, for example, booking systems, reporting systems, accounting and payroll systems. The invention is in automatically 'clocking-on' and 'clocking-off' a worker from their shift, with a very high level of accuracy and without the worker's intervention being required during the shift.

According to a second aspect of the present invention, there is provided a system for automatically recording attendance by a worker at work sites, the system comprising a mobile device for carrying by the worker, the mobile device having at least a processor, internal storage, and a positioning module, and the mobile device being loaded with a schedule of planned work, the schedule including a plurality of planned shifts and each shift including a time window and a location;
the mobile device being adapted to maintain a list of active geofences, each geofence being a perimeter around the location of a shift, wherein the current time is within the time window of the shift;
and the mobile device being further adapted to monitor its position in relation to the list of active geofences by reading its current position from the positioning module and determining whether the position is inside any active geofence, the read-and-check process being repeated at a first sampling interval;
and when the mobile device enters an active geofence, the mobile device is adapted to carry out the steps of:
   repeatedly reading the current position of the mobile device from the position module and storing the position, the read-and-store step being repeated at a second sampling interval for a first predetermined time period after entering the geofence; and
   if the mobile device remains in the geofence for the entirety of the first predetermined time period, recording the time of entry to the geofence as a 'clock-on' time, otherwise, if the mobile device leaves the geofence during the first pre-determined time period, returning to the monitoring step;
when the mobile device exits a geofence after the first predetermined time period has elapsed and a 'clock-on' time has been recorded, the mobile device is adapted to carry out the steps of:
   repeatedly reading the current position of the mobile device from the positioning module and storing the position, the read-and-store step being repeated at a third sampling interval for a second predetermined time period after exiting the geofence; and
   if the mobile device remains outside the geofence for the entirety of the second predetermined time period, recording the time of exiting the geofence as a 'clock-off' time, otherwise, if the mobile device re-enters the geofence during the second predetermined time period, returning to the monitoring step,
in which the second sampling interval and the third sampling interval are shorter intervals than the first sampling interval.

Features described in relation to the mobile device(s) and the server device in the first aspect of the invention may also be incorporated into the second aspect of the invention.

### DESCRIPTION OF THE DRAWINGS

For a better understanding of the present invention, and to show more clearly how it may be carried into effect, a preferred embodiment will now be described by way of example only, with reference to the accompanying drawings, in which
Figure 1 is a flow diagram showing an overview of the method of the invention;
Figure 2 is a flow diagram showing a process for maintaining a list of active geofences, part of the method of Figure 1; and
Figure 3 is a flow diagram showing a process for identifying a position relating to a particular clock-on or clock-off event.

### DESCRIPTION OF THE PREFERRED EMBODIMENT

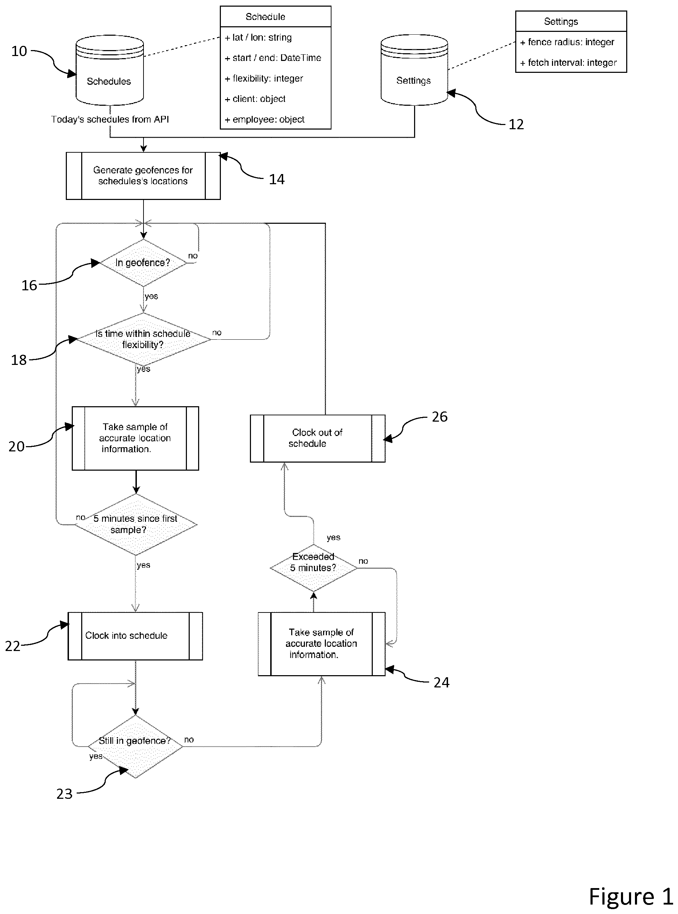

Referring firstly to Figure 1, an overview of a method according to the invention is shown. The starting point is a schedule 10 for each worker. Workers' schedules may be, for example, a day's work or may be much longer, for example covering a week of planned work. In any case, the schedule 10 is a list of locations of client sites which a worker is supposed to visit and corresponding time windows when the visit should take place.

In a multi-worker system, a schedule may be provided for each worker. This is exactly equivalent to having a single schedule 10 where each item has a client site location, a time window, and an identifier for the assigned worker.

The time window for each shift in a schedule is the time period during which the relevant geofence is active. This time window may be stored as a planned shift start and end time, together with a field for 'flexibility', so a shift may be given as, for example, nominally 10am - 11am but with two hours' flexibility. This is equivalent to a time window of 8am to 1pm.

Preferably, schedules for workers are input via a user interface, for example a web interface on a desktop computer. The schedules are then sent to the relevant mobile devices carried by workers via a data communications network. Completion, storage and transmission of schedules may be coordinated by a server device on the data communications network.

In addition, various system parameters 12 may be set, for example a fence radius parameter and a fetch interval parameter. The fence radius parameter determines the extent of the geofence from a given position of a work site. In some embodiments, this global fence radius parameter could be overridden for individual shifts, for example shifts at an unusually large property or at a site where car parking is relatively far from the entrance.

The system parameters 12 and schedules 10 are transmitted to mobile devices, in most embodiments from a central server device. This download of schedules takes place automatically, for example once every day or even more frequently in systems where shifts may change at short notice. In some embodiments, the user is also given the ability to force a download of schedule data. Once the parameters 12 and schedules 10 are stored on the mobile device, the mobile device does not need continuous access to a data network to operate properly. The mobile device has a clock and a positioning module so that it always knows the current time and its current location. The mobile device includes data storage so that clock-on and clock-off times and locations for particular shifts can be stored for later transmission to a server device should a data connection not be available. Clocking on and clocking off can take place fully automatically regardless of whether the mobile device has access to the data network.

At step 14, each mobile device continuously maintains an up-to-date list of active geofences corresponding with its schedule. The frequency with which the list is updated may be determined by the "fetch interval" global system parameter.

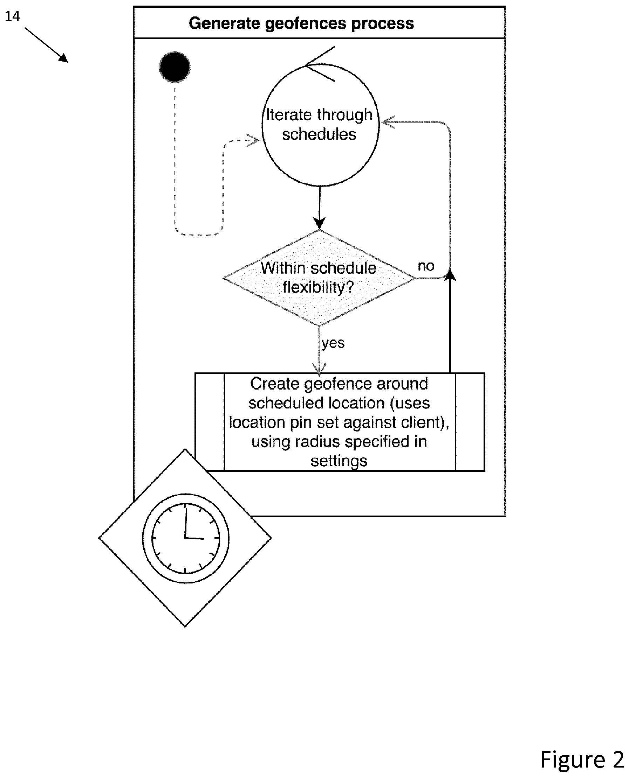

Step 14 is shown in more detail in Figure 2. The mobile device has an internal clock, which from time to time is synchronized with a network time server. The geofence update process iterates through each shift in the schedule of the worker assigned to the particular mobile device, and, for each shift in the schedule which has not already been clocked-off from, if the current time according to the clock on the mobile device is within the time window of the shift, a geofence is created around the location of the shift. Typically, each shift in a schedule will specify just a point location, with a standard radius set as a global parameter being used to determine the extent of each geofence around the point location, but in some embodiments, a specific area for the fence could be attached to the shift information for at least some shifts.

The geofence maintenance process will also remove / deactivate geofences when either a clock-off event has been recorded in relation to that shift, or when the time window for the shift has expired.

Referring back to Figure 1, with an up-to-date list of geofences each mobile device is generally in a monitoring state 16 for most of the time. In the monitoring state 16, the device continually monitors its location to determine whether it is inside any current geofence. Usually this process is carried out by features of the operating system of the device, the application software simply accessing an API to create and destroy geofences, and to receive notifications when geofences have been entered or exited. In any case, in the monitoring state the location of the device will be monitored at a relatively low resolution, although the monitoring resolution may be dynamically adjusted depending on the distance between the last known location of the device and any geofence boundary.

In this embodiment, once the device is identified as having entered an active geofence, a check step 18 is carried out to check that the current time is within the scheduled window. In theory, the geofence is destroyed when the time window expires, however an out-of-date geofence may still exist where the geofence maintenance process is run at a relatively low frequency.

Assuming the geofence is found to correspond to a current time window, the mobile device enters a high-resolution tracking state 20. In this state, the device's current position is sampled at a short time interval, for example once every second. The high-resolution tracking state 20 lasts for a predetermined length of time, for example five minutes. If the mobile device remains within the relevant geofence for the predetermined length of time, then a clock-on event is recorded (step 22). The clock-on time is the time when the mobile device first entered the geofence.

Once the mobile device has 'clocked-on', the device returns to a relatively low-resolution monitoring state 23. This low-resolution monitoring state 23 is similar to the previous low-resolution monitoring state 16, except that in this case the device is monitoring for a geofence boundary being crossed to exit the geofence. When the device exits the geofence after clocking-on, another high-resolution tracking state 24 is entered. Similar to the high-resolution tracking state 20, in this state 24 the mobile device continually samples its position, for example once every second, for a predetermined length of time, for example five minutes. When the device has been outside the geofence for five minutes, a 'clock-off' event is recorded at step 26, the relevant geofence is deactivated (i.e. removed from the list of active geofences) and the mobile device returns to the low resolution monitoring state 16.

Clock-on and clock-off times for each completed shift are sent to a server device. Follow on business processes can then be carried out, for example to compare the time spent at each client's location with the contracted time and address any discrepancies, to provide input data to billing and payroll systems, etc.

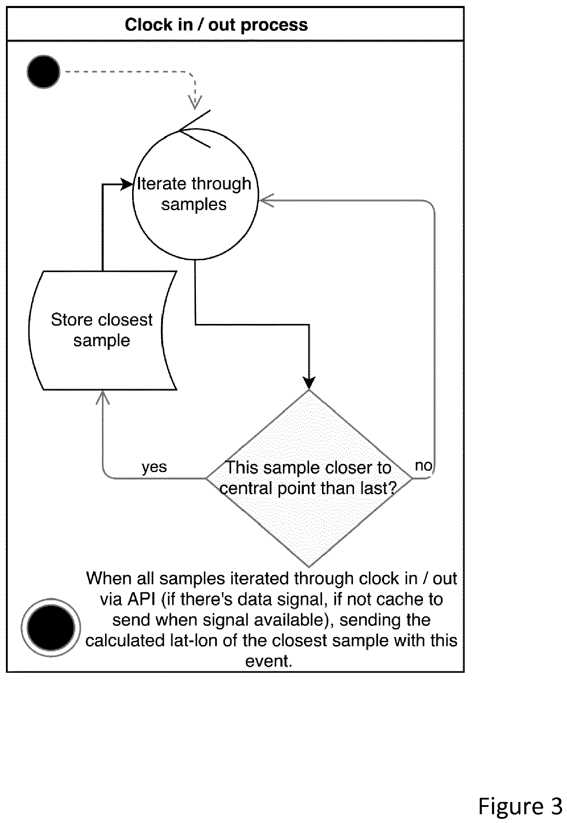

Figure 3 shows more detail of a process with preferably takes place each time a clock-on or clock-off event is recorded - i.e. at step 22 and step 26 in Figure 1. The process of Figure 3 iterates through the position samples taken during the period of high-resolution tracking immediately preceding the clock-on or clock-off event being recorded, and compares each position sample to the central point of the geofence, i.e. in most embodiments, the single point location given for the relevant shift in the schedule 10. The position sample closest to that central point may be recorded (and preferably transmitted to a server) as the location corresponding to the clock-on or clock-off event.

The method of the invention provides for a fully automatic system requiring no distraction from the core duties of the worker, which provides more complete reporting and better accuracy than current manual systems.

Various variations on the specific embodiments described will be apparent to the skilled person. The scope of the invention is defined in the claims.

## Claims

1. A method of automatically recording attendance by a worker at work sites, the method comprising the steps of:
providing a schedule of planned work, the schedule including a plurality of planned shifts and each shift including a time window and a location;
providing the worker with a mobile device, the mobile device including a positioning module for determining the current location of the device, and a processor;
maintaining on the mobile device a list of active geofences, each geofence being a perimeter around the location of a shift, wherein the current time is within the time window of the shift;
monitoring the position of the mobile device in relation to the list of active geofences, the monitoring step including repeatedly reading the current position of the mobile device from the positioning module and determining whether the position is inside any active geofence, the read-and-check process being repeated at a first sampling interval;
when the mobile device enters an active geofence, carrying out the steps of:
repeatedly reading the current position of the mobile device from the positioning module and storing the position, the read-and-store step being repeated at a second sampling interval for a first predetermined time period after entering the geofence; and
if the mobile device remains in the geofence for the entirety of the first predetermined time period, recording the time of entry to the geofence as a 'clock-on' time, otherwise, if the mobile device leaves the geofence during the first pre-determined time period, returning to the monitoring step;
when the mobile device exits a geofence after the first predetermined time period has elapsed and a 'clock-on' time has been recorded, carrying out the steps of:
repeatedly reading the current position of the mobile device from the positioning module and storing the position, the read-and-store step being repeated at a third sampling interval for a second predetermined time period after exiting the geofence; and
if the mobile device remains outside the geofence for the entirety of the second predetermined time period, recording the time of exiting the geofence as a 'clock-off' time, otherwise, if the mobile device re-enters the geofence during the second predetermined time period, returning to the monitoring step,
in which the second sampling interval and the third sampling interval are shorter intervals than the first sampling interval.

2. A method as claimed in claim 1, in which the first sampling interval is variable dependent on the distance between the last known location of the mobile device and the boundary of an active geofence.

3. A method as claimed in claim 1 or claim 2, in which the second sampling interval and the third sampling interval are both less than five seconds, preferably less than two seconds, or more preferably one second or less.

4. A method as claimed in any of the preceding claims, in which the first predetermined time period and the second predetermined time period are both less than fifteen minutes, preferably less than ten minutes, or more preferably five minutes or less.

5. A method as claimed in any of the preceding claims, in which the second sampling interval is the same length as the third sampling interval.

6. A method as claimed in any of the preceding claims, in which the first predetermined time period is the same length as the second predetermined time period.

7. A method as claimed in any of the preceding claims, in which the position of the mobile device during the first predetermined time period which is closest to the centre point of the location of the relevant shift is recorded and associated with the clock-on time of that shift.

8. A method as claimed in any of the preceding claims, in which the position of the mobile device during the second predetermined time period which is closest to the centre point of the location of the relevant shift is recorded and associated with the clock-off time of that shift.

9. A method as claimed in any of the preceding claims, in which the mobile device has a wireless data transceiver for accessing a data network.

10. A method as claimed in any of the preceding claims, in which the mobile device is a mobile telephone.

11. A method as claimed in any of the preceding claims, in which multiple mobile devices are provided, each mobile device being provided to a different worker.

12. A method as claimed in claim 9, in which a server device is provided, and in which the server device can access the same data network as the mobile device(s).

13. A method as claimed in claim 12, in which clock-on and clock-off times are transmitted from the mobile device(s) to the server device.

14. A method as claimed in claim 13, in which a location associated with at least one of the clock-on and clock-off times is transmitted from the mobile device(s) to the server device.

15. A system for automatically recording attendance by a worker at work sites, the system comprising a mobile device for carrying by the worker, the mobile device having at least a processor, internal storage, and a positioning module, and the mobile device being loaded with a schedule of planned work, the schedule including a plurality of planned shifts and each shift including a time window and a location;
the mobile device being adapted to maintain a list of active geofences, each geofence being a perimeter around the location of a shift, wherein the current time is within the time window of the shift;
and the mobile device being further adapted to monitor its position in relation to the list of active geofences by reading its current position from the positioning module and determining whether the position is inside any active geofence, the read-and-check process being repeated at a first sampling interval;
and when the mobile device enters an active geofence, the mobile device is adapted to carry out the steps of:
repeatedly reading the current position of the mobile device from the position module and storing the position, the read-and-store step being repeated at a second sampling interval for a first predetermined time period after entering the geofence; and
if the mobile device remains in the geofence for the entirety of the first predetermined time period, recording the time of entry to the geofence as a 'clock-on' time, otherwise, if the mobile device leaves the geofence during the first pre-determined time period, returning to the monitoring step;
when the mobile device exits a geofence after the first predetermined time period has elapsed and a 'clock-on' time has been recorded, the mobile device is adapted to carry out the steps of:
repeatedly reading the current position of the mobile device from the positioning module and storing the position, the read-and-store step being repeated at a third sampling interval for a second predetermined time period after exiting the geofence; and
if the mobile device remains outside the geofence for the entirety of the second predetermined time period, recording the time of exiting the geofence as a 'clock-off' time, otherwise, if the mobile device re-enters the geofence during the second predetermined time period, returning to the monitoring step,
in which the second sampling interval and the third sampling interval are shorter intervals than the first sampling interval.
